# FASCICULE DE BREVET EUROPEEN

(11) **EP 0 797 153 B1**
(45) Date de publication et mention de la délivrance du brevet: **04.07.2001**
(21) Numéro de dépôt: 97400630.6
(22) Date de dépôt: 20.03.1997
(51) Int. Cl.: G06F 15/16

(54) **Dispositif de traitement d'information comportant plusieurs processeurs en parallèle**
Informationsverarbeitungsvorrichtung mit mehreren parallelen Prozessoren
Information handling device comprising a plurality of parallel processors

(30) Priorité: 21.03.1996 FR 9603527
(43) Date de publication de la demande: 24.09.1997
(73) Titulaire: CSEM Centre Suisse d'Electronique et de Microtechnique SA, 2007 Neuchâtel (CH)
(72) Inventeur: Arm, Claude, 2016 Cortaillod (CH); Masgonty, Jean-Marc, 2035 Corcelles (CH); Piguet, Christian, 2000 Neuchatel (CH)
(74) Mandataire: Caron, Gérard

(56) Documents cités:
- EP-A- 0 323 080
- EP-A- 0 480 657
- WO-A-95/28676
- DE-A- 4 229 286
- US-A- 4 760 521

## Description

La présente invention est relative à un dispositif de traitement d'information conforme au préambule de la revendication 1.

Un dispositif de traitement d'information de ce type est parfois souhaité pour accroître la puissance de traitement, diminuer le temps de réponse du système à des sollicitations extérieures par une exécution de plusieurs tâches en parallèle, ou encore simplifier la programmation de tâches qui doivent intrinsèquement être exécutées en parallèle.

Cependant, les dispositifs de traitement ayant plusieurs processeurs en parallèle ont actuellement encore des inconvénients qui font hésiter les concepteurs à les mettre systématiquement en oeuvre. En effet, ils ont besoin d'un mécanisme de communication entre les processeurs généralement compliqué et associé à un logiciel complexe. Si on n'y prend pas garde, le travail des processeurs risque d'être assez lent en raison du temps qui doit être consacré à la communication entre les processeurs. En outre, il est pratiquement inévitable de devoir mettre au point une programmation spéciale pour les processeurs et qui plus est, la consommation en énergie risque d'être relativement élevée du fait de la nécessité pour les processeurs de communiquer entre eux.

C'est ainsi que l'on connaît par US 4 760 521 une commande de machine outil dans laquelle les processeurs communiquent avec un système d'arbitrage de bus EBA auquel ils sont respectivement connectés par des bus particuliers et propres à chaque processeur.

Chaque processeur peut accéder à sa propre mémoire ou aux mémoires des autres processeurs. Lorsqu'un processeur souhaite accéder à une mémoire d'un autre processeur, il doit passer par le EBA externe qui arbitre entre les requêtes d'accès provenant des divers processeurs, pour allouer l'accès à l'un d'entre eux.

Le EBA alloue l'accès au processeur sélectionné à la mémoire du second processeur en envoyant un signal "de requête d'accès à une mémoire étrangère" à un arbitre de bus local LBA associé à ce second processeur. Le LBA arbitre à son tour entre ce signal de requête d'accès étranger et les utilisateurs locaux du bus du processeur en question pour allouer l'accès à la mémoire à l'un des solliciteurs à condition que le processeur considéré lui-même n'a pas besoin d'un tel accès.

Ainsi, dans ce dispositif antérieur, il y a deux niveaux d'arbitrage qui sont mis en oeuvre lorsque l'un ou plusieurs processeurs sollicitent un accès à une mémoire d'un autre processeur. Tout d'abord, le EBA décide lequel des processeurs solliciteurs peut avoir accès à la mémoire du processeur sélectionné. Puis, au cours d'une opération suivante, le LBA arbitre parmi le processeur sélectionné et les autres utilisateurs locaux de la mémoire considérée pour allouer l'accès à l'un d'entre eux, étant supposé que le processeur associé à cette mémoire ne demande pas lui-même l'accès.

Ce processus d'arbitrage à deux niveaux non seulement nécessite des circuits complexes, mais demande également plusieurs cycles d'horloge ralentissant ainsi le travail de l'ensemble.

L'invention a pour but de fournir un dispositif de traitement d'information comportant plusieurs processeurs en parallèle dépourvu des inconvénients mentionnés.

L'invention a donc pour objet un dispositif de traitement d'information présentant les particularités de la partie caractérisante de la revendication 1.

On obtient ainsi un dispositif de traitement de l'information à processeurs multiples dont la construction est simple et qui ne nécessite pas de programme spécialement conçu pour faire fonctionner les processeurs. Ceux-ci peuvent appartenir aux catégories de processeurs disponibles actuellement sur le marché. En outre, le processus d'arbitrage nécessite un nombre réduit de cycles d'horloge ce qui permet d'augmenter la vitesse de traitement du dispositif.

Grâce à la caractéristique définie dans la revendication 2, l'accès à un espace adressable quelconque d'un processeur quelconque du dispositif peut se faire à l'aide d'une seule instruction et pendant la durée de celle-ci.

D'autres particularités du dispositif de traitement selon l'invention sont définies dans les sous-revendications 3 à 7.

D'autres caractéristiques et avantages de l'invention apparaîtront au cours de la description qui va suivre, donnée uniquement à titre d'exemple et faite en se référant aux dessins annexés sur lesquels:
- la figure 1 est un schéma d'un dispositif de traitement d'information selon l'invention comportant trois processeurs en parallèle;
- la figure 2 est un schéma d'un noeud de connexion utilisé dans le dispositif de traitement d'information selon l'invention;
- la figure 3 est un schéma d'un autre mode de réalisation du dispositif de traitement d'information selon l'invention;
- la figure 4 est un schéma d'un noeud de connexion utilisé dans le dispositif de traitement d'information de la figure 3.

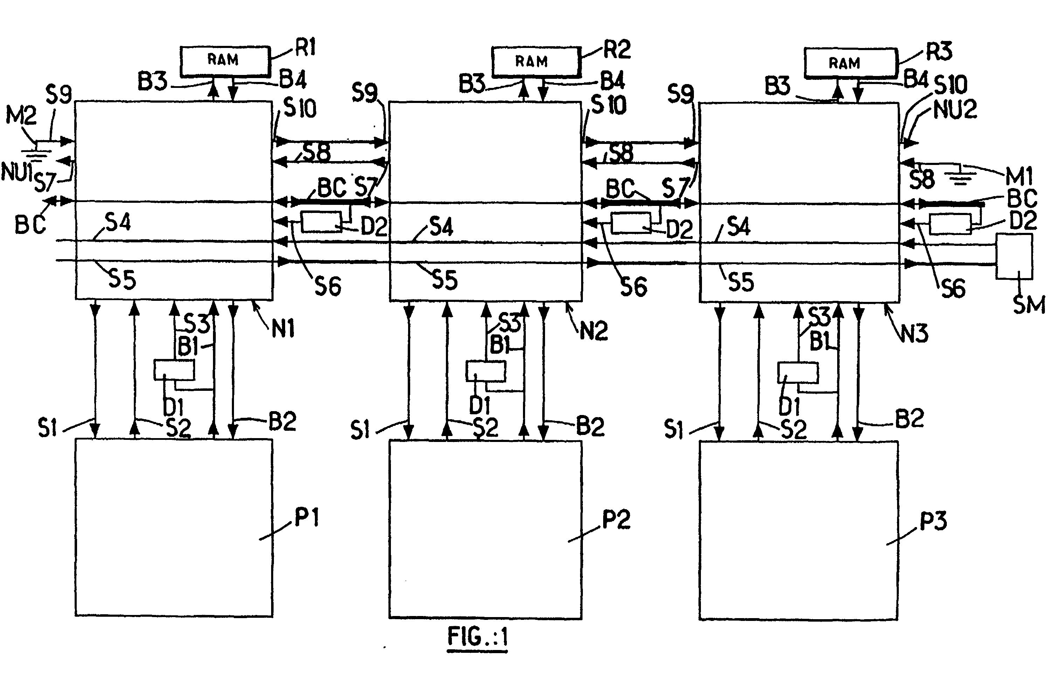

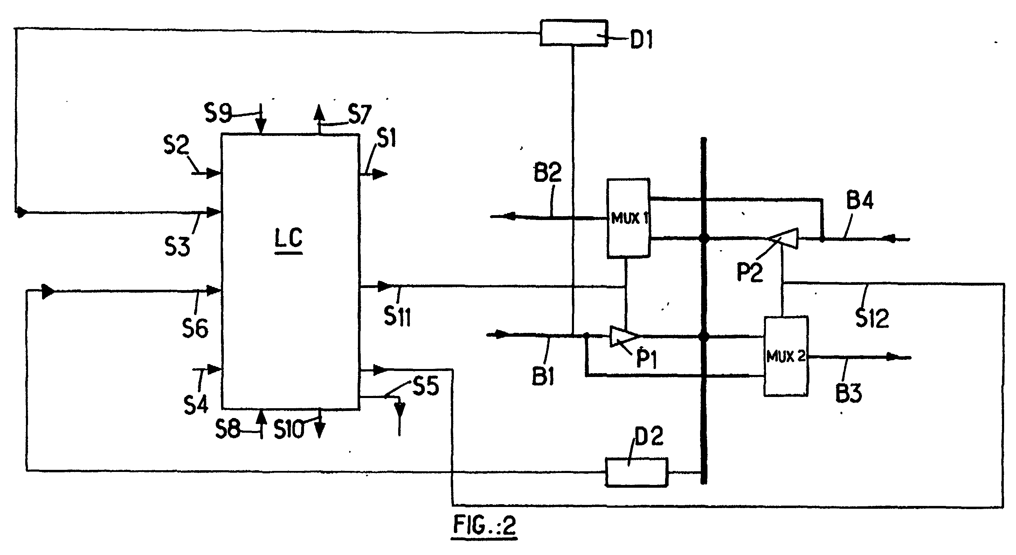

On va tout d'abord décrire le mode de réalisation de l'invention représenté sur les figures 1 et 2. Le dispositif de traitement comporte dans ce cas, à titre d'exemple uniquement, trois processeurs P1, P2 et P3 interconnectés par l'intermédiaire d'un bus de communication unique BC pour les adresses et les données. Cependant, on notera que le nombre de processeurs du dispositif selon l'invention peut être différent de trois. Par ailleurs, le concept de l'invention peut être appliqué à des processeurs de tous types courants disponibles dans le commerce ou même spécialement conçus ("custom designed"). Chaque processeur est pourvu de sa propre mémoire morte ROM (non représentée) dans laquelle sont stockées les instructions de programme qui le font fonctionner.

Selon un aspect important de l'invention, les instructions de programme de tous les processeurs sont uniformes en ce sens qu'elles comportent toutes un champ d'adresse dont une portion, trois bits par exemple, est allouée à l'identification de l'accès qui va être effectué par cette instruction.

Chaque processeur P1, P2 et P3 est connecté à un espace adressable auquel peuvent accéder tous les autres processeurs selon un protocole qui fait partie du concept de l'invention. On entend ici par "espace adressable" tout périphérique avec lequel le ou les processeurs peuvent être amenés à travailler. Dans l'exemple de la figure 1, on n'a représenté qu'un seul de tels périphériques, à savoir pour chaque processeur P1, P2 et P3 une mémoire RAM à accès aléatoire R1, R2 et R3, respectivement. Ainsi, chaque processeur P1, P2 et P3 peut lire et écrire des données dans chacune des mémoires RAM R1, R2 et R3, l'accès étant identifié par la portion d'identification que comporte le champ d'adresse de l'instruction concernée.

Un noeud de communication, N1, N2 et N3 respectivement, est associé à chaque processeur. Ces noeuds de communication sont reliés non seulement à leur propre processeur et à leur propre mémoire, mais ils sont également interconnectés. Ils sont réalisés à l'aide d'une logique câblée.

Pour assurer la communication entre les processeurs et les périphériques, les noeuds de communication peuvent envoyer ou recevoir chacun des signaux de commande et des éléments d'information (adresses et données) qui sont identifiés par leur vocable anglais dans la suite de la description. Sur les figures, ces signaux de commande ont été désignés par une référence alphanumérique près de la connexion sur laquelle ils sont respectivement transmis.

En considérant d'abord la liaison entre un noeud et un processeur (les références S1, S2, S3 etc.... désignent par abréviation à la fois le signal et la connexion correspondante), on a:
- le signal de commande S1 "PROCESSOR READ OK" (Lecture par processeur validé) qui est transmis du noeud vers le processeur;
- le signal de commande S2 "REQUEST FROM PROCESSOR" (Demande d'accès du processeur à un espace d'adressage quelconque) qui est transmis du processeur vers son noeud de communication; et
- le signal de commande S3 "PROCESSOR ACCESS OWN RAM" (le processeur effectue un accès en écriture ou en lecture à sa propre mémoire RAM associée) qui est transmis au noeud du processeur à partir d'un décodeur D1. Ce décodeur extrait à partir d'une adresse circulant- du processeur vers le noeud de communication sur un bus B1, la portion d'identification représentant un code sur plusieurs bits indiquant qu'il s'agit d'une adresse de communication au niveau du processeur lui-même. Comme déjà indiqué, le code de plusieurs bits fait partie des adresses des instructions contenues dans les programmes des processeurs. Le décodeur D1 met le signal S3 à 1 si le processeur envoie une adresse appartenant à son propre espace adressable. Sinon, le signal S3 est à 0. Le même bus B1 permet d'envoyer des données du processeur vers le noeud de communication.

En outre, un bus B2 relie le processeur au noeud de communication pour véhiculer des données vers ce processeur à partir, soit de sa propre mémoire ou d'autres périphériques, soit des mémoires et/ou d'autres périphériques des autres processeurs.

Avant d'examiner comment sont interconnectés les noeuds N1, N2 et N3, il convient de noter que les processeurs sont affectés d'une priorité d'accès les uns par rapport aux autres. Dans l'exemple représenté, le processeur P1 a priorité sur le processeur P2 et ce dernier a priorité sur le processeur P3.

Quant aux liaisons entre les noeuds N1, N2 et N3, on a:
- le signal de commande S4 "READ OTHER OK" (la lecture dans la mémoire d'un autre processeur que celui du noeud considéré est validée) qui est transmis sur une ligne passant d'un noeud à un autre dans le sens de la priorité plus basse à la priorité plus haute des processeurs;
- le signal de commande S5 "OTHER READ OK" (la lecture par un processeur dans la mémoire du processeur du noeud considéré est validée) qui est transmis d'un noeud à l'autre dans le sens du processeur à haute priorité vers le processeur à basse priorité;
- le signal de commande S6 "OTHERS ACCESS THIS RAM" (l'un des autres processeurs accède à la mémoire associée au noeud considéré) qui est transmis au noeud en question à partir des adresses véhiculées sur le bus de communication principal BC. Le signal est décodé sur quelques bits de chaque adresse des instructions par un décodeur D2. Ce dernier met le signal S6 à 1 si l'adresse appartient à un espace adressable d'un autre processeur que celui considéré. Sinon, le signal de commande S6 est à 0;
- le signal de commande S7 "REQUEST TO UPPER PRIORITY" (demande d'accès vers une priorité supérieure) qui est le corollaire du signal de commande S8 "REQUEST FROM LOWER PRIORITY" (demande d'accès à partir d'une priorité inférieure). Dans le cas représenté, ces signaux sont transmis de la priorité inférieure vers la priorité supérieure en commençant par une connexion de masse M1 (valeur 0 dans le cas décrit) entrant dans le noeud N3 de priorité la plus basse vers une connexion non utilisée NU1 sortant du noeud N1 de priorité la plus haute;
- le signal de commande S9 "REQUEST FROM UPPER PRIORITY" (demande d'accès à partir d'une priorité supérieure) qui est le corollaire du signal de commande S10 "REQUEST TO LOWER PRIORITY" (demande d'accès vers une priorité inférieure). Dans le cas représenté, ces signaux sont transmis de la priorité la plus haute en commençant par une connexion de masse M2 (valeur 0) entrant dans le noeud N1 de priorité la plus haute vers une connexion non utilisée NU2 sortant du noeud N3 de priorité la plus basse.

Chaque noeud comprend en outre un bus de communication B3 envoyant des adresses et des données vers l'espace adressable (ou mémoire RAM) associé et un bus de communication B4 véhiculant des données provenant de cet espace adressable.

Le dispositif de traitement d'information comporte également un sommateur SM qui est relié aux lignes sur lesquelles sont présents les signaux S4 et S5 (READ OTHER OK et OTHER READ OK). De la sorte, les signaux S5 sont combinés et si au moins un des signaux S5 est à 1, tous les signaux S4 sont mis à 1. D'autre part, si tous les signaux S5 sont à 0, les signaux S4 sont mis à 0.

Sur la figure 2 qui représente un schéma plus détaillé de l'un des noeuds de communication N1, N2 et N3, tous identiques, on voit que les signaux de commande S1 à S10 sont logiquement combinés dans une logique combinatoire câblée LC pour assurer l'acheminement des adresses et des données et le respect des priorités selon un processus qui sera décrit ci-après. La construction de cette logique combinatoire LC sera à la portée des spécialistes à la lecture de la description de ce fonctionnement.

La logique combinatoire LC engendre également un signal de commande interne S11 "PROCESSOR ACCESS OTHERS" (le processeur du noeud considéré accède à une mémoire d'un autre processeur), ce signal commandant un multiplexeur MUX1 ainsi qu'une porte P1. La logique combinatoire LC engendre encore en autre signal de commande S12 "OTHERS ACCESS RAM" (un autre ou d'autres processeur(s) accède(nt) à une mémoire RAM). Ce signal commande un autre multiplexeur MUX 2 et une autre porte P2.

Le bus de communication BC véhicule les éléments d'information suivants:
- les adresses dans les espaces adressables qu'un processeur veut lire ou écrire;
- les données à lire ou à écrire; et
- les signaux de commande de lecture et d'écriture.

Les bus B1 et B3 convoient les éléments d'information suivants:
- les adresses dans les espaces adressables qu'un processeur donné veut lire ou écrire;
- les données à écrire; et
- les signaux de commande de lecture et d'écriture.

Les bus B2 et B4 véhiculent les données lues dans les espaces adressables tels que les mémoires RAM R1, R2 et R3.

On va maintenant décrire plusieurs configurations de fonctionnement du dispositif de traitement d'information selon l'invention pour en illustrer le fonctionnement.

### CONFIGURATION 1

Lorsque le signal S2 est 0 (c'est-à-dire inactif), le processeur correspondant (qui peut être l'un des trois processeurs P1, P2 ou P3), ne fait aucun accès à un espace adressable y compris à son propre espace adressable. Celui-ci est donc disponible pour un accès par l'un des autres processeurs. La logique combinatoire LC affecte alors les valeurs suivantes aux signaux de commande S1 et S11: S1=1, S11=0. Les signaux S9 et S10 sont transmis dans le sens de la priorité supérieure vers la priorité inférieure et les signaux S7 et S8 sont transmis en sens opposé. Si alors le signal S9 ou S10 est à 1 et si le signal S6 est à 1, alors les signaux S5 et S12 sont à 1; sinon ces signaux sont à 0.

### CONFIGURATION 2

Lorsque le signal S2 est à 1 (le signal est actif), le processeur en question veut faire un accès à un espace adressable. Si le signal S3 est à 1, cet espace adressable est la mémoire RAM du processeur considéré. Cet accès est toujours prioritaire. Dans ces conditions, S1=1, S11=0, S5=0 et S12=0, les signaux S9 et S10 passant dans le sens de la priorité supérieure vers la priorité inférieure et les signaux S8 et S7 passant en sens inverse.

### CONFIGURATION 3

Lorsque le signal S2=1, le processeur concerné veut faire un accès à un espace adressable. Si le signal S3 est à 0, il s'agit d'un espace adressable autre que le sien. Si alors S9=0, le processeur en question gagne l'accès au bus de communication BC. Les signaux S7, S10 et S11 sont à 1 et les signaux S5 et S12 sont à 0. Si dans ces conditions, le signal S4 est à 1, le signal S1 est à 1.

### CONFIGURATION 4

Lorsque le signal S2 est à 1, le processeur considéré veut faire un accès à un espace adressable. Si le signal S3 est à 0, le processeur veut accéder à un espace adressable autre que le sien. Si le signal S9 est à 1, un autre processeur que celui considéré gagne le bus de communication BC. Les signaux de commande sont alors à l'état suivant: S10=1, S1=0 et S11=0. Si dans ces conditions, S6=1, alors les signaux S5 et S12 sont à 1, sinon ils sont à 0.

### CONFIGURATION 5

Lorsque les signaux S11 et S12 sont à O, le processeur considéré accède à son propre espace adressable (ou aucun accès n'est fait à cet espace). Dans ces conditions, le bus BC ne reçoit aucun signal de ce processeur ou de cet espace adressable (les portes P1 et P2 sont bloquées), si bien que ce bus peut être occupé par un autre processeur et un autre espace adressable. Par ailleurs, les multiplexeurs MUX 1 et MUX 2 (figure 2) sont commandés pour établir la communication entre les bus B1 et B3 et les bus B2 et B4 respectivement.

### CONFIGURATION 6

Lorsque le signal S11 est à 1 et le signal S12 est à 0, le processeur considéré accède à un espace adressable appartenant à un autre processeur. Dans ces conditions, les bus B1 et B2 sont connectés au bus de communication BC respectivement par la porte P1 et le multiplexeur MUX1. Les bus B3 et B4 ne sont pas utilisés dans ce cas.

### CONFIGURATION 7

Lorsque le signal S11 est à 0 et le signal S12 à 1, un autre processeur que celui considéré accède à l'espace adressable de ce dernier. Les bus B3 et B4 sont alors connectés au bus de communication BC respectivement par le multiplexeur MUX2 et la porte P2, tandis que les bus B1 et B2 ne sont pas utilisés.

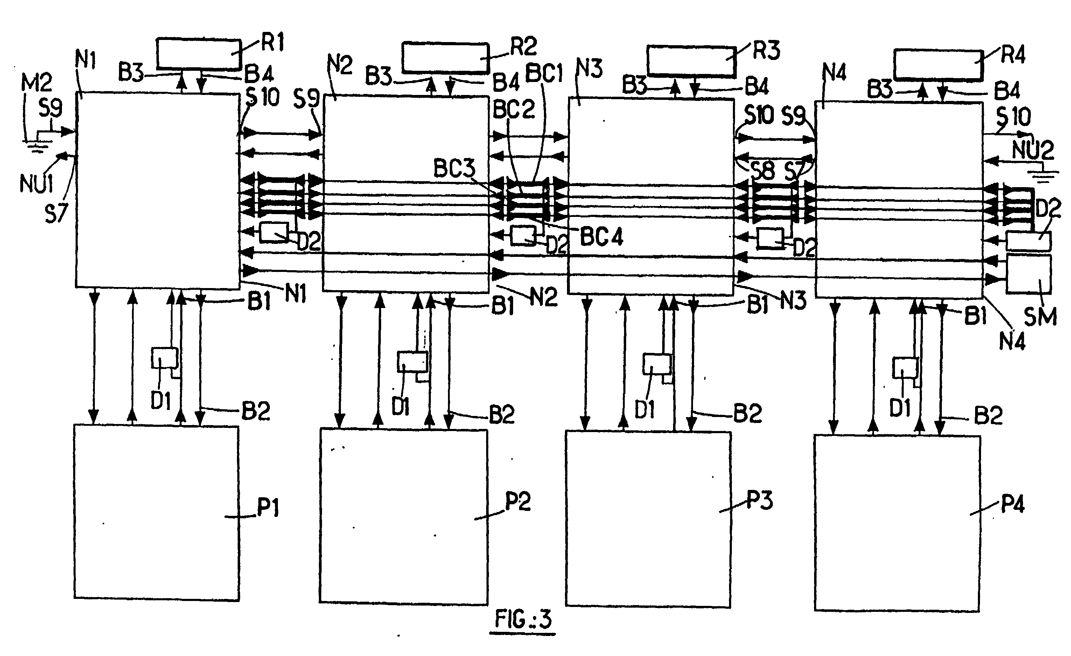

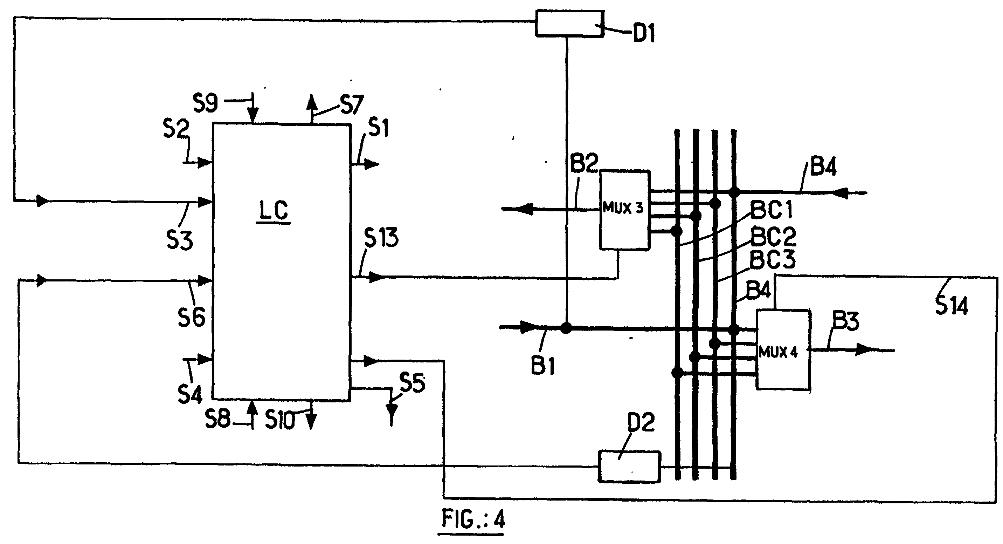

Les figures 3 et 4 représentent un autre mode de réalisation du dispositif de traitement d'information selon l'invention visant à augmenter la vitesse de traitement par rapport à celle que l'on peut obtenir avec le montage représenté sur les figures 1 et 2.

L'exemple représenté comporte quatre processeurs P1 à P4, quatre espaces adressables R1 à R4 et quatre noeuds de connexion N1 à N4. Les processeurs P1 à P4 sont ici directement connectés les uns aux autres par un bus de communication multiple comprenant quatre bus BC1 à BC4 pouvant véhiculer simultanément des informations différentes. Les noeuds de communication N1 à N4 sont semblables à ceux déjà décrits à propos des figures 1 et 2, exceptée leur partie destinée à gérer les bus BC1 à BC4. Ainsi, les signaux S11 et S12 engendrés à l'intérieur de chaque noeud sont remplacés par un signal de commande S13 "SELECT PROC BUS" (sélectionner bus processeur) et un signal de commande S14 "SELECT RAM BUS" (sélectionner bus mémoire RAM). Le premier S13 de ces signaux commande un multiplexeur MUX3 permettant de connecter le bus B2 à l'un ou l'autre des bus BC1 à BC4. Le second signal S14 commande un multiplexeur MUX4 permettant de connecter le bus B3 à l'un de ces bus de communication BC1 à BC4.

Les données véhiculées par les bus B1 et B4 sont constamment placées sur l'un des bus BC1 à BC4.

On examinera ci-dessous les configurations du dispositif de traitement, différentes de celles déjà discutées ci-dessus à propos des figures 1 et 2, du fait des modifications que l'on vient de présenter.

### CONFIGURATION 8

Lorsque le signal S2 est à 0, le processeur concerné ne fait aucun accès à un espace adressable, son propre espace adressable est donc disponible pour un accès par l'un des autres processeurs. Dans ces conditions, S1=1, le signal S9 passe à S10 et le signal S8 passe à S7. Si l'un des signaux S8 ou S9 est à 1 et si le signal S6 est à 1, le signal S5 est mis à 1 et le signal S14 aiguille le bus de communication BC1 à BC4 correspondant sur le processeur qui demande l'accès, sinon S5=0 et le signal S14 est quelconque. Le signal S13 est également quelconque.

### CONFIGURATION 9

Lorsque le signal S2 est à 1, le processeur considéré veut faire un accès à un espace adressable. Si le signal S3 est à 1, le processeur accède à son propre espace adressable en étant prioritaire. Alors S1=1 et le signal S13 aiguille le bus B4 vers le bus B2. Le signal B14 aiguille le bus B1 vers le bus B3. Le signal S9 passe à S10 et le signal S8 passe à S7. S5=0.

### CONFIGURATION 10

Lorsque le signal S2 est à 1, le processeur considéré veut faire un accès à un espace adressable. Si le signal S3 est à 0, le processeur veut accéder à un espace adressable autre que le sien. Si le signal S9 est à 0, ce processeur gagne le bus. Alors S7=1 et S10=1. Les signaux S5 sont à 0. Si S4 est à 1, alors S1=1. Le signal S13 aiguille le bus BC1 à BC4 correspondant à l'espace adressable auquel le processeur veut accéder, vers le bus B2. Le signal S14 est quelconque.

### CONFIGURATION 11

Lorsque le signal S2 est à 1, le processeur considéré veut faire un accès à un espace adressable. Si le signal S3 est à 0, le processeur veut accéder à un espace adressable autre que le sien. Si le signal S9 est à 1, un autre processeur gagne le bus. Alors S7=1 et S10=1. Le signal S13 est quelconque et S5=0. Si le signal S6=1, alors le signal S5 est mis à 1 et le signal S14 aiguille le bus BC1 à BC4 correspondant au processeur qui veut accéder à l'espace adressable. Sinon, S5=0 et le signal S14 est quelconque.

## Revendications

1. Dispositif de traitement d'information comportant une pluralité de processeurs (P1 à P3; P1 à P4) destinés à fonctionner en parallèle, chaque processeur étant associé à au moins un espace adressable (R1 à R3; R1 à R4), caractérisé en ce que tous les processeurs et tous les espaces adressables sont en communication par l'intermédiaire d'un bus de communication commun (BC; BC1 à BC4), en ce qu'entre tous les processeurs et tous les espaces adressables sont respectivement connectés des noeuds de connexion (N1 à N3; N1 à N4) communiquant entre eux et réalisés par des circuits câblés, et en ce que chaque noeud de connexion comporte des moyens de commande (LC, D1, D2, MUX1, MUX2; MUX3, MUX4) pour
- assurer la priorité d'accès d'un processeur quelconque à son propre espace adressable; et
- assurer une hiérarchie de priorité d'accès aux espaces adressables des autres processeurs parmi ladite pluralité de processeurs.

2. Dispositif suivant la revendication 1, caractérisé en ce que chacun desdits processeurs (P1 à P3; P1 à P4) est programmé par des instructions uniformes dans chacune desquelles le champ d'adresse comporte une portion d'identification allouant cette instruction, soit à l'espace adressable du processeur concerné, soit à l'espace adressable d'un autre processeur du dispositif.

3. Dispositif suivant l'une quelconque des revendications 1 et 2, caractérisé en ce que ledit bus de communication est un bus unique (BC).

4. Dispositif suivant l'une quelconque des revendications 1 et 2, caractérisé en ce que le bus de communication est un bus multiple (B1 à B4).

5. Dispositif suivant l'une quelconque des revendications 2 à 4, caractérisé en ce que chaque processeur (P1 à P3; P1 à P4) est connecté à son noeud de connexion associé (N1 à N3; N1 à N4) par l'intermédiaire d'un bus bidirectionnel (B1, B2) et en ce que, pour établir la priorité d'accès d'un processeur à son propre espace adressable, lesdits moyens de commande comprennent un premier décodeur (D1) connecté audit bus bidirectionnel (B1, B2) pour décoder ladite portion d'identification émise par ce processeur et pour engendrer un signal de commande (S3) capable d'établir l'accès direct exclusif de ce processeur à son propre espace adressable.

6. Dispositif suivant l'une quelconque des revendications 2 à 5, caractérisé en ce que lesdits moyens de commande comprennent un second décodeur (D2) connecté audit bus de communication commun (BC) destiné à décoder ladite portion d'identification émise par l'un considéré desdits processeurs et pour engendrer un signal de commande (S6) qui réserve un espace adressable appartenant à un autre processeur pour ledit processeur considéré.

7. Dispositif suivant l'une quelconque des revendications 1 à 6, caractérisé en ce que lesdits noeuds de connexion sont reliés entre eux par des connexions de priorité destinées à transférer des signaux de priorité (S7 à S9) d'un noeud à l'autre selon un ordre prédéterminé de priorité selon lequel les processeurs sont classés.

## Patentansprüche

1. Vorrichtung zum Verarbeiten von Informationen, mit einer Anzahl parallel arbeitender Prozessoren (P1 bis P3; P1 bis P4), wobei jeder Prozessor mindestens einem Adressraum (R1 bis R3; R1 bis R4) zugeordnet ist, dadurch gekennzeichnet, dass sämtliche Prozessoren und sämtliche Adressräume über einen gemeinsamen Kommunikationsbus (BC; BC1 bis BC4) miteinander in Verbindung stehen, dass zwischen sämtlichen Prozessoren und sämtlichen Adressräumen Knoten (N1 bis N3; N1 bis N4) geschaltet sind, die untereinander verbunden und durch verkabelte Schaltungen verwirklicht sind, und dass jeder Knoten Steuermittel (LC, D1, D2, MUX1, MUX2; MUX3, MUX4) aufweist, um
- die Priorität des Zugangs irgendeines Prozessors zu seinem eigenen Adressraum sicherzustellen und
- eine Hierarchie der Zugangspriorität zu den Adressräumen der anderen Prozessoren der besagten Anzahl von Prozessoren sicherzustellen.

2. Vorrichtung nach Anspruch 1, dadurch gekennzeichnet, dass jeder der Prozessoren (P1 bis P3; P1 bis P4) durch gleichförmige Befehle programmiert ist, in denen jeweils das Adressenfeld einen Identifikationsabschnitt aufweist, der diesen Befehl entweder dem Adressraum des betreffenden Prozessors oder dem Adressraum eines anderen Prozessors der Vorrichtung zuordnet.

3. Vorrichtung nach einem der Ansprüche 1 und 2, dadurch gekennzeichnet, dass der Kommunikationsbus ein Einzelbus (BC) ist.

4. Vorrichtung nach einem der Ansprüche 1 und 2, dadurch gekennzeichnet, dass der Kommunikationsbus ein Mehrfachbus (B 1 bis B4) ist.

5. Vorrichtung nach einem der Ansprüche 2 bis 4, dadurch gekennzeichnet, dass jeder Prozessor (P1 bis P3; P1 bis P4) mit seinem zugehörigen Knoten (N1 bis N3; N1 bis N4) durch einen bidirektionalen Bus (B1, B2) verbunden ist und dass zum Herstellen der Priorität des Zugangs eines Prozessors zu seinem eigenen Adressraum die Steuermittel einen ersten Decoder (D1) aufweisen, der mit dem bidirektionalen Bus (B1, B2) verbunden ist, um den von diesem Prozessor ausgegebenen Identifikationsabschnitt zu decodieren und um ein Steuersignal (S3) zu erzeugen, das in der Lage ist, den ausschließlichen unmittelbaren Zugang dieses Prozessors zu seinem eigenen Adressraum herzustellen.

6. Vorrichtung nach einem der Ansprüche 2 bis 5, dadurch gekennzeichnet, dass die Steuermittel einen zweiten Decoder (D2) aufweisen, der mit dem gemeinsamen Kommunikationsbus (BC) verbunden ist, welcher dazu dient, den von einem betrachteten Prozessor ausgegebenen Identifikationsabschnitt zu decodieren und ein Steuersignal (S6) zu erzeugen, das einen zu einem anderen Prozessor gehörenden Adressraum für den betrachteten Prozessor reserviert.

7. Vorrichtung nach einem der Ansprüche 1 bis 6, dadurch gekennzeichnet, dass die Knoten untereinander durch Prioritätsanschlüsse verbunden sind, die dazu dienen, Prioritätssignale (S7 bis S9) eines Knotens auf den anderen nach einer vorgegebenen Prioritätsreihenfolge, in der die Prozessoren eingeordnet sind, zu übertragen.

## Claims

1. Information processing device including a plurality of processors (P1 to P3; P1 to P4) intended to operate in parallel, each processor being associated with at least one addressable space (R1 to R3; R1 to R4), characterized in that all the processors and all the addressable spaces are in communication by way of a common communication bus (BC; BC1 to BC4), wherein between all the processors and all the addressable spaces are respectively connected intercommunicating connection nodes (N1 to N3; N1 to N4) embodied by hard-wired circuits, and wherein each connection node includes control means (LC, D1, D2, MUX1, MUX2; MUX3, MUX4) for
- ensuring priority of access of any processor to its own addressable space; and
- ensuring a hierarchy of priority of access to the addressable spaces of the other processors among said plurality of processors.

2. Device as claimed in claim 1, characterized in that each of said processors (P1 to P3; P1 to P4) is programmed by uniform instructions in each of which the address field includes an identification portion allocating this instruction, either to the addressable space of the relevant processor, or to the addressable space of another processor of the device.

3. Device as claimed in either of claims 1 and 2, characterized in that said communication bus is a single bus (BC).

4. Device as claimed in either of claims 1 and 2, characterized in that the communication bus is a multiple bus (B1 to B4).

5. Device as claimed in anyone of claims 2-4, characterized in that each processor (P1 to P3; P1 to P4) is connected to its associated connection node (N1 to N3; N1 to N4) by way of a bidirectional bus (B1, B2) and in that, in order to establish the priority of access of a processor to its own addressable space, said control means comprise a first decoder (D1) connected to said bidirectional bus (B1, B2) in order to decode said identification portion output by this processor and in order to generate a control signal (S3) capable of establishing the exclusive direct access of this processor to its own addressable space.

6. Device as claimed in anyone of claims 2-5, characterized in that said control means comprise a second decoder (D2) connected to said common communication bus (BC) intended to decode said identification portion output by the relevant one of said processors and in order to generate a control signal (S6) which reserves an addressable space belonging to another processor for said relevant processor.

7. Device as claimed in any one of claims 1-6, characterized in that said connection nodes are interlinked by priority connections intended to transfer priority signals (S7 to S9) from one node to another in a predetermined order of priority according to which the processors are ranked.
